# EUROPEAN PATENT SPECIFICATION

(11) **EP 1 358 062 B1**
(45) Date of publication and mention of the grant of the patent: **29.03.2006**
(21) Application number: 01997390.8
(22) Date of filing: 20.11.2001
(51) Int. Cl.: B32B 3/14, B32B 27/32

(54) **NON-SLIP COVERING SHEET FOR COVERING SURFACES OVERLAID WITH FABRIC**
RUTSCHFREIE ABDECKBAHN ZUR ABDECKUNG VON MIT TEXTILSTOFF ÜBERLAGERTEN FLÄCHEN
FEUILLE DE COUVERTURE ANTIDERAPANTE DESTINEE A COUVRIR DES SURFACES REVETUES DE TISSU

(30) Priority: 21.11.2000 HU 0004635 P; 14.11.2001 HU 0104895 P
(43) Date of publication of application: 05.11.2003
(73) Proprietor: Mandzsu, Jozsef, Sr., 1118 Budapest (HU); Mandzsu, Zoltan, 1112 Budapest (HU); Mandzsu, Jozsef Jr., 2151 Fot (HU)
(72) Inventor: Mandzsu, Jozsef, Sr., 1118 Budapest (HU); Mandzsu, Zoltan, 1112 Budapest (HU); Mandzsu, Jozsef Jr., 2151 Fot (HU)
(74) Representative: Derzsi, Katalin
(86) International application number: PCT/HU2001/000119
(87) International publication number: WO 2002/042068

(56) References cited:
- WO-A-98/34775
- US-A- 5 667 873

## Description

### Technical Field:

The invention relates to non-slip covering sheet for covering surfaces overlaid with fabric, more particularly the invention, on the one hand, is related to domestic articles and particularly, for example, to protecting sheets for covering carpeted floors (e.g. home, hotel, fairground or other floors), to bed-covers for protecting the lying surface of the bed, to sanitary protecting covers for furniture and to table mats. The invention is also related to methods in connection with manufacturing and utilising the said products.

### Background of the Art :

Surfaces overlaid with cloth or fabric, such as indoor floor coverings, are often covered with several kinds of covering sheets against pollution (e.g. dust, mud), for example in case of constructing activities, bad weather or other, temporarily dirty, circumstances. The simplest such covering sheets are covering sheets made of polyethylene film or paper. These are rectangular covering sheets, made up properly folded (i.e. made compact doubled up on itself a number of times) or wound up into reels, whose sizes can be chosen from a wide choice, depending on the continuous size of the surfaces to be covered. For the sake of example, some common sizes (in metres x metres): polyethylene film covering sheets made up folded: 5x4, 2x12, 4x25, 2x6, 3x4, polyethylene film covering sheets made up wound up into reels: 2x50, 2x25, 2x12, 4x25, 4x50, paper covering sheets made up wound up into reels: 1x30, 1x20, 2x20. For smaller surfaces to cover, all of these are made up in smaller sizes, for example in case of entrance-hall floormats or vehicle floormats these sizes can be much smaller, e.g. below 1 m².

A known drawback of such covering sheets is that they easily slip up on the covered surface. Many solutions are known to solve this problem, in some of which the edge of the covering sheet is fixed with adhesion tapes all around after laying down, while in others the covering sheet has, at its lower surface, antislip means. The solutions mentioned also differ in the kinds of the antislip means. According to US 5,962,350 the antislip means is a pressure sensitive adhesive layer. According to US 5,816,305 fabric-upholstered furniture can be covered with a sanitary covering sheet having a self adhesive bottom. According to US 4,822,669. and US 5,130,187 the antislip means is a foam of a sticky character (e.g. polyurethane or EP-PE butylene closed cell foam). In other solutions the antislip means is comprised of soft, elastic stick-enhancing bumps. Thus, for example, in US 5,567,497 there are slightly projecting plastic ribs whose substance is sufficiently resilient to prevent slipping. Also, in US 5,173,346 the antislip means is constituted by tiny dots printed onto the lower surface whose elastomeric material forms a rubber-like, sticky surface, while in US 4,917,932 the lower surface is covered with a thick layer made up of a mixture of rubber crumbs and PVC which gives a resilient, rough lower surface of a high-scale unevenness to the covering sheet. In US 5,227,214 the antislip means is constituted by regularly arranged protrusions of a regular shape, moulded from the rubber-like substance of the lower surface. In a further group of the known solutions, the antislip means in constituted by that the lower surface of the covering sheet comprises an inelastic, non-planar relief. Thus, for example, in US 5,149,572 the lower surface is corrugated cardboard whose ribs form antislip elements, while in US 5,733,629 the lower surface is a polymer layer that is non-smooth due to having been moulded onto an embossed or micro-roughened mould. It is still another type of solutions in which discrete, regularly arranged, hard, dot-like (i.e. not line-like) protrusions, humps form an antislip means. An example for that is US 4,941,551 in which low and flat, button-like, hard protrusions serve simultaneously as breathing-spacer and antislip means. In other solutions the lower surface has, as antislip means, protrusions expressly penetrating between the fibres of the cloth or fabric overlying the covered surface. Thus in US 5,667,873 the lower surface is a mat-roughened surface that comprises regularly arranged, uniform, truncated-cone-shaped engaging protrusions projecting perpendicularly from the surface and formed from the substance of the surface, and in US 5,15,2572 regularly arranged, small, blunt protrusions, e.g. blunt hooks or points, are used against the planar slipping that can be stuck into the fabric. In still another kind of solutions strong bristles (e.g. wild boar bristles) project from the lower surface and the bristles stick with the fabric. This solution is revealed in US 4,361,610. and US 4,377,610. Finally, a solution can be using male components of hook-and-loop fasteners (i.e. resilient stems having hooks and regularly projecting from the surface) fixed to the lower surface that can, in the hook-and-loop way, either be fixed with the female component of the hook-and-loop fastener fixed to the floor or even with the covered cloth surface itself. The male component of the hook-and-loop fastener is fixed to the lower surface in the form of certain strips. Such solutions are described in US 4,968,548., US 4,609,580. and US 5,083,831.
WO-A-9834775 discloses a non-slip covering sheet for covering surfaces overlaid with fabric. The surface has protrusions but there is no mention of the protrusions' dimension. US-A-5667873 defines non-slip covering surface comprising antislip protrusions as well, and the dimensions of the protrusions are not mentioned.
All of the aforementioned solutions are unsatisfactory for covering surfaces overlaid with fabric in some respects. If only the edges or other smaller surface portions of the covering sheet are fixed then the whole surface of the flexible covering sheet slips, wrinkles and is drawn on the surface overlaid with fabric. The self adhesive lower surface can practically only be used in case only certain small portions of the lower surface are covered with pressure sensitive adhesive but this results in the slipping up of the surface parts left free. Pressure sensitive adhesive can not be used well in wet or dusty circumstances, and it can not be detached and replaced repeatedly and it pollutes and is also too expensive. The foam of sticky character, covering the lower surface, indeed performs a certain antislip effect but this effect (especially in wet or dusty circumstances) is insufficient and, in addition, this kind of a product is too thick, too heavy and too expensive. The same is the case with the soft, resilient stick-enhancing bumps. The antislip effect of the antislip means constituted by an inelastic, non-planar relief is also insufficient, especially in wet or dusty circumstances. This is also true for antislip means constituted by discretely arranged, hard, dot-like (i.e. not line-like) protrusions or humps. The antislip means comprising regularly arranged and shaped, e.g. moulded, protrusions penetrating the fibres of the covered fabric surface provides, in the most cases, a considerable non-skid effect but only at those points of the covering sheet that are supplied with such protrusions and these protrusions must just be being pressed into the surface of the fabric. The same is the case with the bristle solutions, too. Such penetrating elements, which do not have hooking shapes, in case they are not being pressed against the fabric, can be pulled out of the fabric and slipped up on it with a lateral force. In addition, their manufacturing is very expensive and covering the whole surface of the covering sheet with them is particularly expensive. The hook-and-loop male components, i.e. the stems having hooks, are very expensive therefore only few little, special portions of the lower side of the covering sheet can be economically covered with them. This has the drawback that the hook-and-loop component is, even in this small quantity, too expensive and, in addition, the surface parts of the covering sheet left free are free to slip up and the hook-and-loop fastener, which indeed provides an excellent strength against slipping, is very hard to detach and therefore the covering sheet must also be designed to be too strong and too expensive. Also, male hook-and-loop components are too thick.

There is an especially strong need for such a covering sheet with which even the non-horizontal surfaces overlaid with fabric, e.g. fabric upholstery, can be covered, typically in the passenger foot area or luggage compartment of vehicles where the fabric upholstery, to be covered, bows up around the horizontal surfaces. There are not any known cheap solutions in which up to the whole of the surface of the covering sheet sticks, in a detachable way still strongly enough, to even the vertical surfaces overlaid with fabric, e.g. fabric upholstery, in the said spots of the vehicles. These places can, in addition, typically be dusty and/or wet when laid over.

### Disclosure of the Invention:

The main object of the invention is providing a non-slip covering sheet for covering surfaces overlaid with fabric, whose antislip means can, even in dusty or wet circumstances, be very effective, cheap, thin, lightweight, flexible, multiply and easily detachable and covering a surface portion relatively big in relation to the covering sheet (preferably covering the whole of the surface). Further it is an object that the covering sheet should be able to be laid over the surface overlaid with fabric easily and smoothly. It is also the object to present further advantageous solutions at the field of the invention. The invention covers methods of manufacturing and applying of the covering sheet.

According to the recognition of the present invention our main object can be achieved by forming in the lower surface of the non-slip covering sheet antislip protrusions for the antislip engaging with the free fibres of the fabric. The solution can really well be utilised for such fabric surfaces in which, close to the surface of the fabric, the direction of the free fibres or threads of fibres also contains a component parallel with the surface. Such are, for example, the looped or non-woven carpets or car upholstery but, for example, carpets having cut fibres, such as the usually more expensive plush carpets, are different. The widest range of application of the sanitary covering sheets is, on the one hand, as a household means, related to covering the floor carpets of the fairgrounds during the building up of the booths, temporarily covering the floor carpets of offices, business rooms, hotel or airport corridors or other high-traffic places and, on the other hand, to covering the foot mats and luggage compartments upholstered with fabric in vehicles. In all of these applications the fabric overlying the surfaces to be covered is, almost without exception, looped or non-woven.

After having studied the commonly used fabric surfaces, e.g. carpets, upholstery, to be covered we have come to a result that in order of our main object the particles forming the antislip protrusions must be sufficiently rigid and strong in order that they can, during the penetration, spread for themselves the free fibres and that they can sustain with them an engagement of a strength appropriate for the aim of application. In accordance with the fibre size and fibre looseness of the commonly used (new or used i.e. pressed down) fabrics or upholstery such protrusions are necessary that are neither too big nor too small. It has been found that the necessary height is between 40 microns and 3000 microns. In order of a shear-direction engagement strength, sustainable even in lack of a direct normal-direction pressure, it is necessary that the protrusions form certain undercuts which means that the perpendicular projection of the protrusion to the surface carrying it is bigger than its section with the surface.

As it was said, in the case of the known covering sheets the way they are made up (e.g. multiple folding or winding up into a reel) and their size are basically determined by the size of the surface overlaid with fabric to be covered. Thus also in case of the new covering sheets, as a hidden possibility, it is possible to make up the product in all the different sizes and methods, folded and wound up, as usual. However, surprisingly and just because of the great surface and very high fixing strength of its novel antislip means, some of the possible ways making up the product provide an applicability better by a qualitative leap than that provided by the rest of the ways. Namely the thing is that while the ordinary covering sheets can be laid down (e.g. by multiple folding out) onto a big surface, overlaid by fabric, more or less wrinkled and slanting and then the wrinkles can be removed by edges of the covering sheet being pulled out and the slanting covering sheet can be turned into the proper orientation by turning, this pulling out and smoothing will not be possible in the case of the new covering sheet because every point of the roughened surface of the covering sheet engages stubbornly, e.g. like thistles, with the fabric surface in connection with them. Therefore the lying of the new covering sheet can only be corrected by the whole or at least a bigger part of the covering sheet being utterly lifted off the fabric overlying the surface to be covered and being repositioned again in a proper position. According to our observations, due to this respect, those ones of the theoretically possible ways of making up the product in which the covering sheet is made up wound up in a reel around a winding core (i.e. not multiply folded and flat) or its size does not exceed 20 square metres are more advantageous by a qualitative leap than the others. Reels, kept rigid by the winding core, can easily be properly laid down for the first attempt straight and wrinkle-free and the lying of the covering sheet of a not too big surface can yet be corrected the above mentioned way. Surfaces overlaid with fabric, bigger than 20 m², can thus be covered either with a covering sheet wound up in a reel or with several smaller rectangular ones. This character makes the new covering sheet especially fit and advantageous for such applications in which relatively smaller surfaces overlaid with fabric are to be covered. Such are covering the entrance-hall carpet or the foot carpet or luggage compartment of a vehicle.

According to this, the invented method is, in essence, a method for protecting from pollution a surface overlaid with fabric in which method a surface overlaid with fabric to be protected from pollution is provided and a protecting non-slip covering sheet is provided, the protecting non-slip covering sheet having a lower surface provided with antislip protrusions and an upper surface opposite the lower surface, and the surface overlaid with fabric to be protected from pollution is covered with the protecting non-slip covering sheet in a way that the lower surface of the protecting non-slip covering sheet is connected with the surface overlaid with fabric, the method being new in that as a protecting non-slip covering sheet such a non-slip covering sheet is provided whose antislip protrusions are constituted by suitably rigid and strong roughening particles fixed with a random orientation to its lower surface and at least some of the antislip protrusions are such that their height is between 40 microns and 3000 microns and their perpendicular projection to the lower surface is bigger than their section with the lower surface, and the protecting non-slip covering sheet is provided wound up in a reel around a winding core and/or with a size smaller than or equal to 20 square metres.

It is advantageous if the covering sheet sticks not only on a surface overlaid with fabric, e.g. on a carpet, but also on a hard floor. This can be achieved with such a non-slip covering sheet which also has such antislip protrusions that are comprised of such particles, preferably granules, that are commonly suitable to stick with a hard surface, due to their surface substance being somewhat sticky. For this purpose, as a substance-component, any of the commonly used agents can be utilised such as suitable rubber, rubber-derivative, elastomer, plastomer, linear low density polyethylene (LLDPE), ethylene-vinyl-acetate (EVA), poly-isobuthylene (PIB) etc.. It is advantageous if the height of these protrusions is at least partly greater than that of the said, suitably hard and rigid antislip protrusions according to the invention because thus they are to touch the floor if the covering sheet is laid over a hard, smooth floor and thus they provide sticking. It is advantageous if these protrusions, made of a substance also sticking to hard floors, are at the same time sufficiently hard and rigid to act as antislip protrusions providing an engagement with the fibres of the fabric. Such protrusions can be made, for example, of certain polyethylene granules containing EVA.

According to this, the essence of the product invented is a non-slip sheet, suitable for covering surfaces overlaid with a fabric, that has a lower surface suitable to be connected with a fabric, and an upper surface opposite the lower surface, and on its lower surface, on the entire surface or on one or more parts thereof, has antislip protrusions suitable for an antislip engagement with a fabric, the non-slip sheet being new in that its antislip protrusions are constituted by suitably rigid and strong roughening particles fixed with a random orientation to its lower surface and at least some of the antislip protrusions are such that their height is between 40 microns and 3000 microns and their perpendicular projection to the lower surface is bigger than their section with the lower surface, and at least some of its antislip protrusions are of elastomer or plastomer, and the non-slip sheet is suitable for winding up in a reel around a winding core and/or has a size smaller than or equal to 20 square metres.

By covering sheet a thin or thick, disposable or multiple use, flexible or rigid, single layered or multiple layered product is meant possibly being homogeneous or composite in its substance, whose most common utilisation is protecting from pollution the surface overlaid with fabric, e.g. upholstery, carpet etc., but in addition to this it can have further functions, too, such as providing a non-slip engagement with the surface overlaid with fabric for different purposes or decoration in which latter case the upper surface of the covering sheet can have a decorative ornamentation, pattern or image. In the case of the fabric overlying the surface to be covered the word fabric means woven, knitted, non-woven (e.g. fleece or felt), flocked, velour or plush type fabric or any other kind of fabric, cloth-upholstery, linen, carpet etc. as the non-slip covering sheet can be advantageously utilised with all of these. Preferably the whole of the lower surface is roughened in order of a better antislip effect. As it is known the orientational state of the particle is the direction of the spatial co-ordinate system ordered to the particle in relation to the co-ordinate system of the said lower surface. The particles are fixed to the lower surface with random orientation which means that the particles can be in any of their possible orientation states so none of their such orientation states are either excluded or required. Thus there is no such state defined in which the particle could be abnormally upside down and the particle has no special points that should look, for example, upward or downward. This provides two advantages. On the one hand it makes the product very cheaply manufactured since the bringing of particles onto a surface in the random orientation way, e.g. sprinkling, is a method easier, simpler and cheaper than any other different method. Taking an illustrative example, it is simpler and easier to throw down the same dice randomly than putting them down in such a manner that the upper surface of all the dice show e.g. an even number or the number six. The regularly shaped and regularly arranged protrusions of the known earlier solutions could not be made this way. It is a further significant cost-decreasing factor that in our case simply-shaped, cheap particles, e.g. granules, can be used which are obviously cheaper than, for example, stems having hooks or regular truncated cones. On the other hand, the random character is isotropic i.e. it provides an antislip effect of about the same extent in all directions. The particles are preferably solid i.e. not hollow, not foamed. The particles can be granules whose material can be plastic or other materials e.g. saw dust. When the product is being made, the protrusions might possibly be even better fixed to the surface by an additional pressing or rolling operation which possibly modifies the final shape of the protrusions more or less flattening their tops. This operation can actually be useful and essentially does not increase the costs. Thus the present invention also regards such covering sheets whose antislip protrusions are constituted by rigid and strong roughening particles, preferably sprinkled granules, fixed with a random orientation to its lower surface, the protrusions having, in their entirety or just around their tops, more or less flattened shapes. Thus a new, distinguishing property of the invented product is that a certain random, stochastic character or irregularity is effective in the arrangement and/or shape of its protrusions (i.e. in the shape and/or orientation state of the particle forming the protrusion) which distinguishes it from products moulded in moulds or made up in other utterly regular ways.

The roughening particles are suitably rigid and strong which means that, unlike, for example, the protrusions foamed lightweight or the elastic, soft, flexible protrusions such as soft rubberised humps, they do not deform, do not break but rather behave as rigid bodies when pressed between the fibres of the fabric and when exposed to a shear load common with covering sheets. A certain extent of deformation can, of course, occur which does not affect the utilisation as long as it can assure the penetration between the fibres and the sufficiently strong hooking with the fibres. As for hardness and rigidity, the dimensioning of the particles can be more accurately done knowing the particular, aimed application. For the most practical utilisation purposes it is well suitable if the roughening particles are powder granules consisting of a solid plastic or polymer. The fixation of the particles must be strong enough to be able to transfer the necessary load to the covering sheet. The fixation can be e.g. welding and/or adhesion. The adhesion can be such in which the particle and the surface fix with the help of a further additional adhesive material or can be such in which the necessary adhesion is provided by the substance of the particle and/or the surface without further adhesive materials, for example if the particle is a so called hot melt polymer adhesive granule such as ethylene-acrylic esther-maleic anhydride terpolymer adhesive granule. The additional adhesive material can be a crosslinking adhesive, for example an adhesive or lacquer crosslinking by UV light, which can cover the surface between the protrusions in its entirety or in parts only, e.g. only around and next to the protrusions. The height of at least a part of the antislip protrusions is between 40 microns and 3000 microns where the height is the greatest extent in normal direction of the protrusion related to the said lower surface. The perpendicular projection of the said protrusions to the lower surface is bigger than their section with the lower surface and this ensures that the shape of the protrusion is such that it overhangs to the side, over its own fixation surface, to at least a certain extent and thus forms an undercut or undercuts in which the free fibres of the fabric overlying the surface to be covered can get caught. The protrusions are expedient to be dimensioned, for the particular applications, knowing the properties of the fabric, e.g. carpet or upholstery, to be covered, in a way that the distance between them, their height and width, the distance between the lower surface and their widest part etc. should make it the easiest possible for the protrusions to penetrate the deepest possible between the free fibres or threads of fibres and for the free fibres or bundles of fibres to hook on the protrusions, preferably on their lower, narrower parts.

The product can be made up wound up in a reel around a winding core independent of its size which, in a topological sense, means that the covering sheet is wound up around a winding axis in several turns with the usual winding regularity and thus it forms a cylinder-like reel having an approximately circular outer cross section. The main topological character of the reel is that its cross section is a curve of spiral topology. Within this, the reel can be a single layer reel or a multi-layer reel which refers to the single-layer or multi-layer character of the spiral curve in its cross section. The reel is wound up around the winding core which gives rigidity to the reel. The substance of the winding core is usually paper but it can be a different suitable material, too. The reel may possibly be flattened (e.g. due to storage) but this flattening can be pressed back and thus the reel can be made more regular in order of easier unwinding. It is advantageous in order of easier layability if the outer surface of the reel is the roughened lower surface of the covering sheet. The covering sheet being not bigger than 20 m² can also be made up multiply folded or in other, non-wound forms. There can be also tearing perforations in the made up product in order to help tearing off smaller portions. The covering sheets, corresponding to the given concrete applications, can of course also have non-rectangular shapes e.g. arched.

The advantage of the invention is that it is very suitable for covering surfaces overlaid with fabric because its antislip means is, even in dusty or wet circumstances, very effective, cheap, thin, lightweight, flexible, can be easily and repeatedly detached and can cover a surface portion relatively big in relation to the covering sheet (preferably the whole of the surface of the covering sheet). In addition, the covering sheet can be laid over the surface to be covered overlaid with fabric easily and smoothly. As a sanitary covering sheet it is advantageous for example because one can form a rim, projecting from the surface of the covered fabric in a free, loop-like manner along the edges of the covering sheet, by lifting the edge of the covering sheet and by moving it inwards and laying it down again, beyond which rim the edge of the covering sheet is also fixed down to the fabric lying over the covered surface. This heightened rim prevents pollution from getting off the covering sheet. The product can uniformly be used with new or already stamped fabrics, carpets, upholstery however in the case of some heavily used, felted fabrics it can be advantageous to loosen up the fibres of the fabric before its utilisation, for example with a brush or in other ways.

Also in the respect of engagement with surfaces to be covered overlaid with fabrics of the most possible kinds of quality and fibre structure it is advantageous if the covering sheet simultaneously has antislip protrusions of different sizes. This means that it is advantageous if the quotient of the heights of the highest and lowest antislip protrusions of the covering sheet is at least 1.1.

In the respect of the break-off strength of the antislip protrusions it is advantageous if at least a part of the antislip protrusions of the lower surface, preferably a high proportion of theirs (more preferably at least 60% of them, or at least 75% of them or, even more preferably, at least 95% of them), is such that the quotient of the area of the section of the protrusion with the plane of the lower surface and the area of the perpendicular projection of the protrusion to the plane of the lower surface is high, concretely the said quotient is at least 0.05, preferably at least 0.15, more preferably at least 0.30, even more preferably at least 0.50.

In the respect of effective hooking between the antislip protrusions and the fibres of the fabric overlying the surface to be covered it is advantageous if at least a part of the antislip protrusions of the lower surface, preferably a high proportion of theirs (more preferably at least 60% of them, or at least 75% of them or, even more preferably, at least 95% of them) is such that the quotient of the area of the section of the protrusion with the plane of the lower surface and the area of the perpendicular projection of the protrusion to the plane of the lower surface is low, concretely the said quotient is at most 0.95.

In the respect of the main object it is advantageous if the covering sheet contains a water-impermeable plastic layer. In the respect of costs it is advantageous if the lower surface is a water-impermeable plastic layer (e.g. polyethylene) to which polymer granules, preferably of polyethylene, are fixed, preferably with welding. This is, for example, such an inexpensive embodiment which makes the product disposable.

The antislip protrusions form a fixing in the shear-direction with the fibres of the fabric overlying the surface to be covered. This results in such a load to the protrusion which endeavours to turn it with a torque and thus to free the hooked fibre. In certain cases this can lead to the lower surface bending from its original plane around the protrusion and thus making it possible for the protrusion to turn away. In order of preventing this, it is advantageous if the covering sheet has certain rigidity. This can be ensured, for example, by the covering sheet comprising such a plastic layer whose mass is at least 10 grams per square metre. The layer constituting the lower surface is preferably a plastic layer having a mass of at least 10 grams per square metre, even more preferably of at least 20 grams per square metre. For the sake of comparison: the typical mass of the ordinary polyethylene film covering sheets is less than 6.7 grams per square metre which already provides them with the strength that they need. Also in the respect of increasing the rigidity, it is advantageous if the covering sheet, preferably in its lower surface, comprises a layer of high density polyethylene whose mass is at least 940 kg/m³. The layer constituting the lower surface and the potential further layers above it can be bonded with each other at certain surface parts, the surface parts being essentially uniformly distributed, e.g. in a matrix of dots. These bonding surface parts can cover 1% or 2% or even up to 100% of the total surface. In case the lower layers, e.g. plastic film arid layers, are bonded, e.g. adhered or welded, to each other in at least 5% of their surface then they resist the said bending load in an approximately unitary way. Thus it is advantageous if the common mass of the lower layers of the covering sheet fixed to each other in pairs in surface parts being essentially uniformly distributed and making up at least 5% of their surface is at least 10 grams per square metre. It is clear that the problem of the fibres escaping from the hooking can very well be solved by making the lower layer(s) thicker and more rigid but this, in any given case, must be kept in accordance with costs permitted at the given application, e.g. disposable product.

The higher lifting and peeling strength of the fixing with the fabric overlying the surface to be covered can be achieved by forming protrusions of special shapes. In a disadvantageous case the surface of the antislip protrusion is smooth, e.g. shiny, but it is more advantageous if the surface of at least a part of the antislip protrusions is concave, more preferably the antislip protrusion has a concave outline which means that it has such a view in which its outline looks concave. The concave i.e. recessed surface parts of such particles having irregular, randomly non-uniform orientation make such an engagement with the free fibre sections of the fabric surface possible that has a required lifting and peeling strength, all due to the fibres entering the concave recesses of the particle.

The new non-slip covering sheet, being for example, in one of its most practicable forms, a polyethylene film having a bottom roughened with antislip protrusions and a smooth top, proposes a new problem. The plastic surfaced covering sheets used earlier were rather poorly fixed, against slipping, to the carpet or upholstery below them thus the slipperiness of their upper surface was not critical as the covering sheet slipped up on the fabric overlying the covered surface usually earlier than the object touching the covering sheet from above, e.g. a shoe sole, slipped up on the covering sheet. The new covering sheet, however, does not slip up on the fabric overlying the covered surface thus the slipperiness of its plastic upper surface prevents the full utilisation of all the antislip possibilities. For example, if the floor carpet of the fairground is covered, for the period of time of erecting the booths, with the covering sheet, such a covering is created that does not slip up on the floor carpet but still, people walking over it can not move confidently enough on the smooth, slippery upper surface. In the respect of our related object, i.e. the increasing of the antislip character, it is advantageous if the upper surface, opposite the lower surface for the connection with the fabric overlying the surface to be covered, of the covering sheet has on its entire surface or on part or parts of its surface, as antislip means, a material of a filamentous and/or fibrous structure. Applying a material of filamentous and/or fibrous structure is advantageous cost-wise, e.g. in the form of a layer of cheap fabric such as thin non-woven fabric especially in the case of disposable covering sheets i.e. those used for a short period of time.

Sometimes covering sheets are laid beside each other with a certain overlap and this way a bigger area is covered. At the overlap, the lower surface of the covering sheet lies on the upper surface of another similar covering sheet. The edges at the overlaps are usually, in lack of any better solutions, adhered down with tapes in order that the overlapped portions of covering sheets do not slip up on each other. As it was seen, in the case of the new covering sheets the smaller sizes are typical thus an even greater need arises for applying overlaps. Our related object is providing a covering sheet whose upper surface, opposite to the covered surface, creates an engagement of reduced slipperiness with the bottom antislip protrusions of another similar covering sheet, this way making it possible to effectively cover a bigger surface overlaid with fabric with several covering sheets partially overlapping each other. The upper surface can be of the above mentioned quality only around the edges but it is an even more advantageous object that the whole upper surface should be of that quality since this could make it possible that neighbouring covering sheets can be overlapped with each other in any possible relative position.

This object is achieved with applying such a non-slip covering sheet whose upper surface, in the whole of its surface or in one or more surface parts, has, as a surface covering, a material of a loose fibrous structure that has free fibres and/or bundles of fibres that have free sections fixed at both ends to the upper surface, in which the thickness of at least a part of the free fibres and/or bundles of fibres is as small as possible, concretely smaller than the half of the height of at least a part of the antislip protrusions and in which the material of fibrous structure is thick to such an extent and the looseness of its fibrous structure is of such an extent which makes it possible for at least a part of the antislip protrusions to enter the fibrous structure by means of at least a part of the antislip protrusions finding room in the free space between the free fibres and/or bundles of fibres of the material of fibrous structure. In this sense those are the free fibres or bundles of fibres that have such free sections which sections are free for the engagement in the sense that they are not closely surrounded by other fibres and which free sections are fixed to the upper surface at both of their ends. The said fixing can be direct or indirect, thus it can be such, for example, in which the ends of the fibre section are fixed to the other fibres of the material of fibrous structure forming the covering and are fixed to the upper surface below the material of fibrous structure indirectly i.e. with the multiple mediation of the other fibres of the material of fibrous structure. The free fibres are sufficiently thin in order that they can get hooked with the protrusions, preferably with the lower, narrower parts of the protrusions. The sufficiently great thickness and sufficient looseness of the material of fibrous structure, together, make it possible that the antislip protrusion that enters the fibrous structure finds sufficient room in the free space (or in the space opening free due to the penetration) among the free fibres and/or bundles of fibres of the fibrous structure, the room being enough for it in width as well as in depth by which the free fibres can hook onto the lower, narrower part of the protrusion. The said material of loose fibrous structure is preferably a non-woven polymer fleece.

This solution has the advantage that the bottom antislip protrusions of the covering sheet being on top at the overlap create an engagement with the material of loose fibrous structure which engagement is of a very decreased slip and, in case of necessity, even of sufficient lifting and peeling strength, and this surface covering of the upper surface, e.g. non-woven plastic fabric, can be cheaply and practicably utilised for the whole of the upper surface. Thus there is no need for any additional means for fixing the edges to each other.

As said, it is our object to present a method for manufacturing the invented non-sip covering sheet. In accordance with the previous sections of the description, the essence of this invention is a method for producing a non-slip sheet suitable for covering surfaces overlaid with a fabric, in which method a plastic layer having a lower surface is provided and suitably rigid and strong roughening particles are provided and the roughening particles are brought and fixed with a random orientation to the lower surface of the plastic layer and thus antislip protrusions are formed thereon, the method being new in that as roughening particles at least partly elastomer or plastomer granules are provided and at least some of the antislip protrusions are formed such that their height is set between 40 microns and 3000 microns and their perpendicular projection to the lower surface is formed bigger than their section with the lower surface, and the fixing is done with welding or with such adhesion in which the necessary adhesion is provided by the substance of the particle or by the substance of the lower surface without further adhesive materials, and the size of the non-slip sheet is made smaller than or equal to 20 square metres and/or a winding core is provided and the non-slip sheet is wound up in a reel around the winding core. It is advantageous if the height of the antislip protrusions is set in a way that the quotient of the height of its highest and lowest antislip protrusion is set to be at least 1.1. It is advantageous if at least a part of the antislip protrusions are formed in a way that the quotient of the area of the section of the antislip protrusion with the plane of the lower surface and the area of the perpendicular projection of the antislip protrusion to the plane of the lower surface is kept at most 0.95.

### Disclosure of the Drawings :

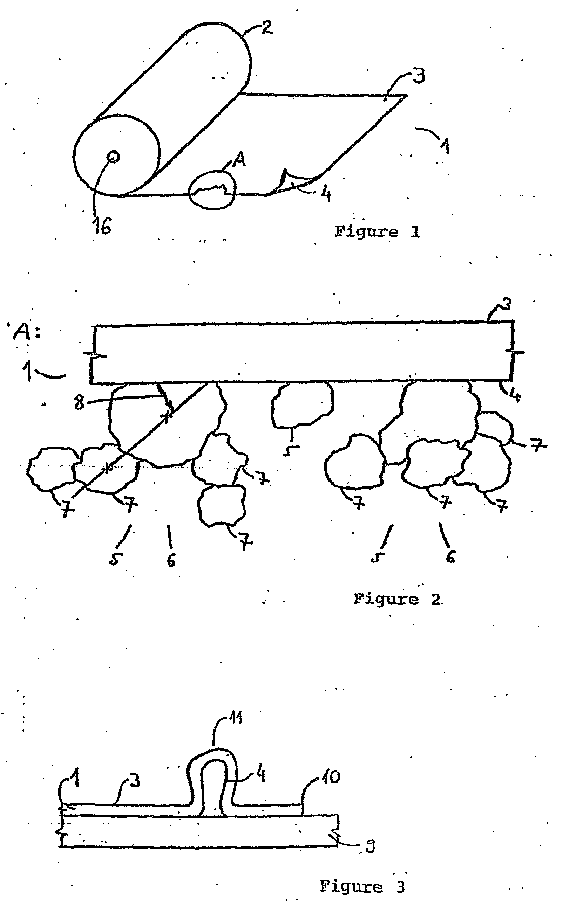

Fig. 1. shows a household non-slip covering sheet 1 made up in a reel 2. One can observe the reel 2, the winding core 16, the upper surface 3 and the lower surface 4 having antislip protrusions 5.
Fig. 2. is a magnified section of portion "A" of Fig. 1. One can observe the antislip protrusions 5, e.g. hooking protrusions 6, and the granules forming them, e.g. hooking granules 7, which are fixed on the basic granule with the angle of fixation 8, the value of the angle of fixation being e.g. 45°.
Fig. 3. shows the edge 10 of a non-slip covering sheet 1 spread over carpet 9 where there is a sanitary loop 11 formed along the edge 10.

### Examples :

### Example 1.

This example relates to using a household non-slip covering sheet 1. In particular, the carpeted floor of a fairground is covered with the sheet which is a water impermeable high density polyethylene film of 40 microns the density of which is 0.953 kg/m³ and its lower surface 4 is in its full extent roughened with antislip protrusions 5 serving for creating an antislip engagement with the free fibres of the floor carpet. Its antislip protrusions 5 are constituted by rigid and strong roughening particles sprinkled and fixed with a random orientation, with welding, to its lower surface 4, the particles being reactor powder grains of high density polyethylene. The height of the antislip protrusions 5 is between 40 microns and 3000 microns and, within that, that of their majority is between 200 microns and 700 microns and they are of an average height of 300 microns. The projection of the antislip protrusions 5 to the lower surface 4 is greater than their section with the lower surface 4. The non-slip covering sheet 1 is made up in the form of a reel 2 wound up, in one layer i.e. without a preliminary centre folding or gussetting, around a paper winding core 16 of an inner diameter of 50 mm's and it size is 1 x 10 metres. The outer surface of the reel 2 is the roughened lower surface 4. The surface closeness of the antislip protrusions 5 is about 40 pieces/cm², their distribution and shape is irregular and of a random character. The antislip protrusions 5 are not equal in height, the quotient between the height of the highest and that of the lowest antislip protrusion 5 is about 3.5. In addition, lower surface 4 comprises, in a lower quantity, softer EVA powder grains which are fixed to it with adhesion, provided by the EVA substance. Their height is in an average about 350 microns. The 96% of the antislip protrusions 5 is such that the quotient between the area of the section between the antislip protrusion 5 and the plane of the lower surface 4 on the one hand and the area of the perpendicular projection of the antislip protrusion 5 taken to the plane of the lower surface 4 on the other hand is about 0.5. The body density of the antislip protrusions 5 is about 0,954 kg/m³. The antislip protrusions 5, which are constituted by rough-surfaced grains of reactor powder i.e. grains not ground but made directly chemically, are of a concave surface, in particular of a concave outline.

### Example 2.

This example shows a non-slip covering sheet 1, of a size of 1x2.5 metres, with which the carpet 9 of an entrance hall is covered and protected. Its layer making up its lower surface 4 is a 15 micron polyethylene film which is, in its full surface, roughened by rigid and strong polyethylene granules, of a quantity of 5 g/m², of a size not greater than 500 microns and typically about 250 to 300 microns, welded with a random orientation to the surface and which is thereby provided with antislip protrusions 5 for an antislip engagement with the free fibres of the upholstered or fabric surface. Thus the height of the antislip protrusions 5 is surely between 150 microns and 500 microns and their projection to the lower surface 4 is greater than their section with the lower surface 4. Its next layer is a crepe paper of a mass of 33 g/m², and this is closed from the top by the hydrophilic non-woven fabric, i.e. fleece, of polypropylene of a mass of 15 g/m², constituting the upper surface 3. The non-woven is a so-called spunbonded non-woven i.e. its fibres are of an infinite length and are fixed to each other with welding at the crossings. The fixation between the said three layers is, in pairs, provided by adhering. The adhesive is a non-watersoluble, crosslinked adhesive that is applied in regularly arranged circular spots making up 5% of the surface. The diameter of the circular spots is 6 mm, and these are, in the two adhesive layers, at identical locations and thus the paper is, from the two sides, fully crossed and soaked by the adhesive this way creating load transmitting bridges that are solid even when wet and that lead through the paper which gets pulped when wet. The tearing strength, against a rubbing load arriving from the top, of the lowest water impermeable layer is greater than that of the layers above it. The said polypropylene non-woven overlying the upper surface 3 of the non-slip covering sheet 1 in its full area is such a material of a loose, fibrous structure that has free fibres having free sections fixed at both of their ends to the upper surface 3 whose thickness (about 6 to 10 microns) is much lower than one-fourth of the height of the antislip protrusions 5 and the non-woven is thick and loose to such an extent that makes it possible for the antislip protrusions 5 to enter the fibrous structure by means of the antislip protrusions 5 finding enough room in the free space among the free fibres of the non-woven. The tearing strength of the said adhesion fixing the two kinds of plastic layers and the paper layer between each other is lower than the tearing strength of the individual layers. This results in the film, paper and non-woven layers being able to be torn off each other and collected separately for recycling.

## Claims

1. Method for protecting from pollution a surface overlaid with fabric in which method a surface overlaid with fabric to be protected from pollution is provided and a protecting non-slip covering sheet (1) is provided, the protecting non-slip covering sheet (1) having a lower surface (4) provided with antislip protrusions (5) and an upper surface (3) opposite the lower surface (4), and the surface overlaid with fabric to be protected from pollution is covered with the protecting non-slip covering sheet (1) in a way that the lower surface (4) of the protecting non-slip covering sheet (1) is connected with the surface overlaid with fabric, **characterised in that** as a protecting non-slip covering sheet (1) such a non-slip covering sheet is provided whose antislip protrusions (5) are constituted by suitably rigid and strong roughening particles fixed with a random orientation to its lower surface (4) and at least some of the antislip protrusions (5) are such that their height is between 40 microns and 3000 microns and their perpendicular projection to the lower surface (4) is bigger than their section with the lower surface (4), and the protecting non-slip covering sheet (1) is provided wound up in a reel (2) around a winding core (16) and/or with a size smaller than or equal to 20 square metres.

2. The method according to Claim 1, **characterised in that** the quotient of the heights of the highest and lowest antislip protrusions (5) is at least 1.1.

3. The method according to any of Claims 1 to 2, **characterised in that** at least a part of the antislip protrusions (5) of the lower surface (4) is such that the quotient of the area of the section of the antislip protrusion (5) with the plane of the lower surface (4) and the area of the perpendicular projection of the antislip protrusion (5) to the plane of the lower surface (4) is at most 0.95.

4. The method according to any of Claims 1 to 3, **characterised in that** such a non-slip covering sheet (1) is provided which has at least some antislip protrusions (5) made of elastomer or plastomer.

5. The method according to any of Claims 1 to 4, **characterised in that** as a protecting non-slip covering sheet (1) such a sheet is provided on which at least a part of the antislip protrusions (5) are of concave outlines.

6. The method according to any of Claims 1 to 5, **characterised in that** as a protecting non-slip covering sheet (1) such a sheet is provided whose upper surface (3), in the whole of its surface or in one or more surface parts, has, as a surface covering, a material of a loose fibrous structure that has free fibres and/or bundles of fibres that have free sections fixed at both ends to the upper surface (3), in which the thickness of at least a part of the free fibres and/or bundles of fibres is smaller than the half of the height of at least a part of the antislip protrusions (5) and in which the material of fibrous structure is thick to such an extent and the looseness of its fibrous structure is of such an extent which makes it possible for at least a part of the antislip protrusions (5) to enter the fibrous structure by means of at least a part of the antislip protrusions (5) finding room in the free space between the free fibres and/or bundles of fibres of the material of fibrous structure.

7. Non-slip covering sheet (1) for covering surfaces overlaid with a fabric, that has a lower surface (4) suitable to be connected with a fabric and an upper surface (3) opposite the lower surface (4), and on its lower surface (4), on the entire surface or on its one or more parts, has antislip protrusions (5) for an antislip engagement with a fabric, **characterised in that** its antislip protrusions (5) are constituted by suitably rigid and strong roughening particles fixed with a random orientation to its lower surface (4) and at least some of the antislip protrusions (5) are such that their height is between 40 microns and 3000 microns and their perpendicular projection to the lower surface (4) is bigger than their section with the lower surface (4) and at least some of its antislip protrusions (5) are of elastomer or plastomer, and the non-slip covering sheet (1) is suitable for winding up in a reel (2) around a winding core (16) and/or has a size smaller than or equal to 20 square metres.

8. Non-slip covering sheet (1) according to Claim 7, **characterised in that** the quotient of the heights of its highest and lowest antislip protrusions (5) is at least 1.1.

9. Non-slip covering sheet (1) according to any of Claims 7 to 8, **characterised in that** at least a part of the antislip protrusions (5) of its lower surface (4) is such that the quotient of the area of the section of the antislip protrusion (5) with the plane of the lower surface (4) and the area of the perpendicular projection of the antislip protrusion (5) to the plane of the lower surface (4) is at most 0.95.

10. Non-slip covering sheet (1) according to any of Claims 7 to 9, **characterised in that** at least a part of its antislip protrusions (5) are of concave outlines.

11. Non-slip covering sheet (1) according to any of Claims 7 to 10, **characterised in that** its upper surface (3), in the whole of its surface or in one or more parts thereof, has, as a surface covering, a material of a loose fibrous structure that has free fibres and/or bundles of fibres that have free sections fixed at both ends to the upper surface (3), in which the thickness of at least a part of the free fibres and/or bundles of fibres is smaller than the half of the height of at least a part of the antislip protrusions (5) and in which the material of fibrous structure is thick to such an extent and the looseness of its fibrous structure is of such an extent which makes it possible for at least a part of the antislip protrusions (5) to enter the fibrous structure by means of at least a part of the antislip protrusions (5) finding room in the free space between the free fibres and/or bundles of fibres of the material of fibrous structure.

12. Method for producing a non-slip sheet (1) suitable for covering surfaces overlaid with a fabric, in which method a plastic layer having a lower surface (4) is provided and suitably rigid and strong roughening particles are provided and the roughening particles are brought and fixed with a random orientation to the lower surface (4) of the plastic layer and thus antislip protrusions (5) are formed thereon, **characterised in that** as roughening particles at least partly elastomer or plastomer granules are provided and at least some of the antislip protrusions (5) are formed such that their height is set between 40 microns and 3000 microns and their perpendicular projection to the lower surface (4) is formed bigger than their section with the lower surface (4), and the fixing is done with welding or with such adhesion in which the necessary adhesion is provided by the substance of the particle or by the substance of the lower surface (4) without further adhesive materials, and the size of the non-slip sheet (1) is made smaller than or equal to 20 square metres and/or a winding core (16) is provided and the non-slip sheet (1) is wound up in a reel (2) around the winding core (16).

13. The method of Claim 12 **characterised in that** the height of the antislip protrusions (5) is set in a way that the quotient of the height of its highest and lowest antislip protrusion (5) is set to be at least 1.1.

14. The method of any of Claims 12-13 **characterised in that** at least a part of the antislip protrusions (5) are formed in a way that the quotient of the area of the section of the antislip protrusion (5) with the plane of the lower surface (4) and the area of the perpendicular projection of the antislip protrusion (5) to the plane of the lower surface (4) is kept at most 0.95.

## Patentansprüche

1. Verfahren zum Schützen einer mit einem Textilstoff belegten Oberfläche vor einer Verschmutzung, wobei in dem Verfahren eine mit einem Textilstoff belegte Oberfläche, die vor einer Verschmutzung geschützt werden soll, vorgesehen wird und eine schützende, rutschfeste Abdeckbahn (1) vorgesehen wird, wobei die schützende, rutschfeste Abdeckbahn (1) eine mit Rutschverhinderungsvorsprüngen (5) versehene untere Oberfläche und eine obere Oberfläche (3) gegenüber der unteren Oberfläche (4) aufweist und wobei die mit einem Textilstoff belegte Oberfläche, die vor einer Verunreinigung geschützt werden soll, mit der schützenden, rutschfesten Abdeckbahn (1) in der Weise abgedeckt wird, dass die untere Oberfläche (4) der schützenden, rutschfesten Abdeckbahn (1) mit der mit dem Textilstoff belegten Oberfläche verbunden wird, **dadurch gekennzeichnet, dass** als eine schützende, rutschfeste Abdeckbahn (1) eine derartige rutschfeste Abdeckbahn vorgesehen wird, deren Rutschverhinderungsvorsprünge (5) durch geeignet starre und stark aufrauende Partikel gebildet sind, die in einer zufälligen Orientierung auf ihrer unteren Oberfläche (4) befestigt sind, und wenigstens einige der Rutschverhinderungsvorsprünge (5) derart beschaffen sind, dass ihre Höhe im Bereich von 40 Mikrometern bis 3000 Mikrometern liegt und ihre senkrechte Projektion auf die untere Oberfläche (4) größer ist als ihre Schnittfläche mit der unteren Oberfläche (4) und die schützende, rutschfeste Abdeckbahn (1) als eine um einen Wicklungskern (16) aufgewickelte Rolle (2) vorgesehen ist und/oder eine Größe besitzt, die kleiner oder gleich 20 Quadratmeter beträgt.

2. Verfahren nach Anspruch 1, **dadurch gekennzeichnet, dass** der Quotient aus den Höhen des höchsten und des niedrigsten Rutschverhinderungsvorsprungs (5) wenigstens 1,1 beträgt.

3. Verfahren nach einem der Ansprüche 1 bis 2, **dadurch gekennzeichnet, dass** wenigstens ein Teil der Rutschverhinderungsvorsprünge (5) der unteren Oberfläche (4) derart ist, dass der Quotient aus der Schnittfläche des Rutschverhinderungsvorsprungs (5) mit der Ebene der unteren Oberfläche (4) und aus der Fläche der senkrechten Projektion des Rutschverhinderungsvorsprungs (5) auf die Ebene der unteren Oberfläche (4) höchstens 0,95 beträgt.

4. Verfahren nach einem der Ansprüche 1-3, **dadurch gekennzeichnet, dass** eine rutschfeste Abdeckbahn (1) vorgesehen wird, die wenigstens einige Rutschverhinderungsvorsprünge (5) aufweist, die aus einem Elastomer oder aus einem Plastomer hergestellt sind.

5. Verfahren nach einem der Ansprüche 1 bis 4, **dadurch gekennzeichnet, dass** als eine schützende, rutschfeste Abdeckbahn (1) eine Lage vorgesehen wird, auf der wenigstens ein Teil der Rutschverhinderungsvorsprünge (5) konkave Umrisse besitzt.

6. Verfahren nach einem der Ansprüche 1 bis 5, **dadurch gekennzeichnet, dass** als schützende, rutschfeste Abdeckbahn (1) eine Bahn vorgesehen wird, deren obere Oberfläche (3) als Ganzes oder in einem oder in mehreren Oberflächenabschnitten als Oberflächenabdeckung ein Material mit einer lockeren faserartigen Struktur aufweist, die freie Fasern und/oder Faserbündel mit freien Abschnitten, die an beiden Enden an der oberen Oberfläche (3) befestigt sind, besitzt, wobei die Dicke wenigstens eines Teils der freien Fasern und/oder der Faserbündel kleiner ist als die halbe Höhe wenigstens eines Teils der Rutschverhinderungsvorsprünge (5) und bei der die Dicke des Materials der faserartigen Struktur und die Lockerheit der faserartigen Struktur jeweils ein Ausmaß haben, die wenigstens einem Teil der Rutschverhinderungsvorsprünge (5) ermöglichen, in die faserartige Struktur wenigstens mit einem Teil der Rutschverhinderungsvorsprünge (5) einzudringen, die in dem freien Raum zwischen den freien Fasern und/oder den Faserbündeln des Materials mit faserartiger Struktur Platz finden.

7. Rutschfeste Abdeckbahn (1) zum Abdecken von mit einem Textilstoff belegten Oberflächen, die eine untere Oberfläche (4), die mit einem Textilstoff zu verbinden ist, und eine obere Oberfläche (3) gegenüber der unteren Oberfläche (4) aufweist und die auf ihrer unteren Oberfläche (4) auf der gesamten Oberfläche oder in einem oder in mehreren Abschnitten hiervon Rutschverhinderungsvorsprünge (5) für einen rutschfesten Eingriff mit einem Textilstoff besitzt, **dadurch gekennzeichnet, dass** die Rutschverhinderungsvorsprünge (5) durch geeignet starre und stark aufrauende Partikel gebildet sind, die in einer zufälligen Orientierung auf ihrer unteren Oberfläche (4) befestigt sind, und wenigstens einige der Rutschverhinderungsvorsprünge (5) derart sind, dass ihre Höhe im Bereich von 40 Mikrometern bis 3000 Mikrometern liegt und ihre senkrechte Projektion auf die untere Oberfläche (4) größer ist als ihre Schnittfläche mit der unteren Oberfläche (4) und wenigstens einige der Rutschverhinderungsvorsprünge (5) aus einem Elastomer oder aus einem Plastomer bestehen und die rutschfeste Abdeckbahn (1) zu einer Rolle (2) um einen Wicklungskern (6) aufgewickelt sein kann und/oder eine Größe besitzt, die kleiner oder gleich 20 Quadratmeter beträgt.

8. Rutschfeste Abdeckbahn (1) nach Anspruch 7, **dadurch gekennzeichnet, dass** der Quotient aus den Höhen ihres höchstens und ihres niedrigsten Rutschverhinderungsvorsprungs (5) wenigstens 1,1 beträgt.

9. Rutschfeste Abdeckbahn (1) nach einem der Ansprüche 7 bis 8, **dadurch gekennzeichnet, dass** wenigstens ein Teil der Rutschverhinderungsvorsprünge (5) ihrer unteren Oberfläche (4) derart ist, dass der Quotient aus der Schnittfläche des Rutschverhinderungsvorsprungs (5) mit der Ebene der unteren Oberfläche (4) und aus der Fläche der senkrechten Projektion des Rutschverhinderungsvorsprungs (5) auf die Ebene der unteren Oberfläche (4) höchstens 0,95 beträgt.

10. Rutschfeste Abdeckbahn (1) nach einem der Ansprüche 7 bis 9, **dadurch gekennzeichnet, dass** wenigstens ein Teil ihrer Rutschverhinderungsvorsprünge (5) konkave Umrisse hat.

11. Rutschfeste Abdeckbahn (1) nach einem der Ansprüche 7 bis 10, **dadurch gekennzeichnet, dass** ihre obere Oberfläche (3) als Ganzes oder in einem oder in mehreren Abschnitten hiervon als Oberflächenabdeckung ein Material einer lockeren faserartigen Struktur aufweist, die freie Fasern und/oder Faserbündel mit freien Abschnitten, die an beiden Enden an der oberen Oberfläche (3) befestigt sind, besitzt, wobei die Dicke wenigstens eines Teils der freien Fasern und/oder der Faserbündel kleiner als die halbe Höhe wenigstens eines Teils der Rutschverhinderungsvorsprünge (5) ist und wobei die Dicke des Materials der faserartigen Struktur und die Lockerheit der faserartigen Struktur jeweils ein Ausmaß haben, die wenigstens einem Teil der Rutschverhinderungsvorsprünge (5) ermöglichen, in die faserartige Struktur wenigstens mit einem Teil der Rutschverhinderungsvorsprünge (5) einzudringen, die in den freien Raum zwischen den freien Fasern und/oder den Faserbündeln des Materials mit faserartiger Struktur Platz finden.

12. Verfahren zum Herstellen einer rutschfesten Lage (1), die mit einem Textilstoff belegte Oberflächen abdecken können, wobei in dem Verfahren eine Kunststoffschicht mit einer unteren Oberfläche (4) vorgesehen wird und geeignet starre und stark aufrauende Partikel vorgesehen werden und die aufrauenden Partikel in einer zufälligen Orientierung auf die unteren Oberfläche (4) der Kunststoffschicht gebracht und befestigt werden, so dass darauf Rutschverhinderungsvorsprünge (5) gebildet werden, **dadurch gekennzeichnet, dass** als aufrauende Partikel wenigstens zum Teil ein Elastomer- oder Plastomer-Granulat vorgesehen wird und wenigstens einige der Rutschverhinderungsvorsprünge (5) so geformt sind, dass ihre Höhe im Bereich von 40 Mikrometern bis 3000 Mikrometern liegt und ihre senkrechte Projektion auf die untere Oberfläche (4) größer ausgebildet ist als ihre Schnittfläche mit der unteren Oberfläche (4) und die Befestigung durch Schweißen oder durch derartiges Kleben erfolgt, dass die notwendige Haftung durch die Substanz des Partikels oder durch die Substanz der unteren Oberfläche (4) ohne weitere Klebstoffmaterialien geschaffen wird, und
- die Größe der rutschfesten Lage (1) kleiner oder gleich 20 Quadratmeter beträgt und/oder
- ein Wicklungskern (16) vorgesehen wird und die rutschfeste Lage (1) zu einer Rolle (2) um den Wicklungskern (16) aufgewickelt wird.

13. Verfahren nach Anspruch 12, **dadurch gekennzeichnet, dass** die Höhe der Rutschverhinderungsvorsprünge (5) in der Weise festgelegt ist, dass der Quotient aus den Höhen des höchsten und des niedrigsten Rutschverhinderungsvorsprungs (5) auf wenigstens 1,1 gesetzt ist.

14. Verfahren nach einem der Ansprüche 12-13, **dadurch gekennzeichnet, dass** wenigstens ein Teil der Rutschverhinderungsvorsprünge (5) in der Weise ausgebildet ist, dass der Quotient aus der Schnittfläche des Rutschverhinderungsvorsprungs (5) mit der Ebene der unteren Oberfläche (4) und aus der Fläche der senkrechten Projektion des Rutschverhinderungsvorsprungs (5) auf die Ebene der unteren Oberfläche (4) bei höchstens 0,95 gehalten wird.

## Revendications

1. Procédé pour protéger contre la pollution une surface revêtue de tissu, dans lequel procédé une surface revêtue de tissu devant être protégée contre la pollution est prévue et une feuille de couverture antidérapante protectrice (1) est prévue, la feuille de couverture antidérapante protectrice (1) ayant une surface inférieure (4) pourvue de saillies antidérapantes (5) et une surface supérieure (3) opposée à la surface inférieure (4), et la surface revêtue de tissu devant être protégée contre la pollution est recouverte par la feuille de couverture antidérapante protectrice (1) de telle sorte que la surface inférieure (4) de la feuille de couverture antidérapante protectrice (1) soit connectée avec la surface revêtue de tissu, **caractérisé en ce que**, à titre de feuille de couverture antidérapante protectrice (1), une telle feuille de couverture antidérapante est prévue, dont les saillies antidérapantes (5) sont constituées de particules rugosifiantes convenablement rigides et résistantes fixées selon une orientation aléatoire à sa surface inférieure (4) et au moins certaines des saillies antidérapantes (5) sont telles que leur hauteur soit comprise entre 40 micromètres et 3000 micromètres et que leur projection perpendiculaire à la surface inférieure (4) soit supérieure à leur section avec la surface inférieure (4), et la feuille de couverture antidérapante protectrice (1) est prévue en étant enroulée en une bobine (2) autour d'un coeur d'enroulement (16) et/ou avec une taille inférieure ou égale à 20 mètres carrés.

2. Procédé selon la revendication 1, **caractérisé en ce que** le quotient des hauteurs des saillies antidérapantes maximale et minimale (5) est d'au moins 1,1.

3. Procédé selon l'une quelconque des revendications 1 et 2, **caractérisé en ce qu'**au moins une partie des saillies antidérapantes (5) de la surface inférieure (4) est telle que le quotient de la surface de la section de la saillie antidérapante (5) avec le plan de la surface inférieure (4) et de la surface de la projection perpendiculaire de la saillie antidérapante (5) au plan de la surface inférieure (4) soit d'au plus 0,95.

4. Procédé selon l'une quelconque des revendications 1 à 3, **caractérisé en ce qu'**une telle feuille de couverture antidérapante (1) est prévue, laquelle a au moins certaines saillies antidérapantes (5) faites en élastomère ou en plastomère.

5. Procédé selon l'une quelconque des revendications 1 à 4, **caractérisé en ce qu'**à titre de feuille de couverture antidérapante protectrice (1), est prévue une telle feuille sur laquelle au moins une partie des saillies antidérapantes (5) a des contours concaves.

6. Procédé selon l'une quelconque des revendications 1 à 5, **caractérisé en ce qu'**à titre de feuille de couverture antidérapante protectrice (1), est prévue une telle feuille dont la surface supérieure (3), dans la totalité de sa surface ou dans une ou plusieurs parties de surface, a, à titre de couverture de surface, un matériau ayant une structure fibreuse lâche qui a des fibres et/ou faisceaux de fibres libres qui ont des sections libres fixées aux deux extrémités à la surface supérieure (3), où l'épaisseur d'au moins une partie des fibres et/ou faisceaux de fibres libres est inférieure à la moitié de la hauteur d'au moins une partie des saillies antidérapantes (5), et où le matériau de structure fibreuse est épais dans une mesure telle et la souplesse de sa structure fibreuse a une mesure telle qu'il devienne possible qu'au moins une partie des saillies antidérapantes (5) entrent dans la structure fibreuse grâce au fait qu'au moins une partie des saillies antidérapantes (5) trouve de la place dans l'espace libre entre les fibres et/ou les faisceaux de fibres libres du matériau ayant une structure fibreuse.

7. Feuille de couverture antidérapante (1) pour recouvrir des surfaces revêtues d'un tissu ayant une surface inférieure (4) devant être connectée à un tissu et une surface supérieure (3) opposée à la surface inférieure (4), et, sur sa surface inférieure (4), sur toute la surface ou sur une ou plusieurs parties de celle-ci, elle présente des saillies antidérapantes (5) pour un engagement antidérapant avec un tissu, **caractérisée en ce que** ses saillies antidérapantes (5) sont constituées de particules rugosifiantes convenablement rigides et résistantes fixées selon une orientation aléatoire à sa surface inférieure (4) et au moins certaines des saillies antidérapantes (5) sont telles que leur hauteur soit comprise entre 40 micromètres et 3000 micromètres et que leur projection perpendiculaire à la surface inférieure (4) soit supérieure à leur section avec la surface inférieure (4), et au moins certaines de ses saillies antidérapantes (5) sont en élastomère ou en plastomère, et la feuille de couverture antidérapante (1) convient pour être enroulée en une bobine (2) autour d'un coeur d'enroulement (16) et/ou a une taille inférieure ou égale à 20 mètres carrés.

8. Feuille de couverture antidérapante (1) selon la revendication 7, **caractérisée en ce que** le quotient des hauteurs des saillies antidérapantes maximale et minimale (5) est d'au moins 1,1.

9. Feuille de couverture antidérapante (1) selon l'une quelconque des revendications 7 et 8, **caractérisée en ce qu'**au moins une partie des saillies antidérapantes (5) de sa surface inférieure (4) est telle que le quotient de la surface de la section de la saillie antidérapante (5) avec le plan de la surface inférieure (4) et de la surface de la projection perpendiculaire de la saillie antidérapante (5) au plan de la surface inférieure (4) soit d'au plus 0,95.

10. Feuille de couverture antidérapante (1) selon l'une quelconque des revendications 7 à 9, **caractérisée en ce qu'**au moins une partie de ses saillies antidérapantes (5) a des contours concaves.

11. Feuille de couverture antidérapante (1) selon l'une quelconque des revendications 7 à 10, **caractérisée en ce que** sa surface supérieure (3), dans la totalité de sa surface ou dans une ou plusieurs parties de celle-ci, a, à titre de couverture de surface, un matériau ayant une structure fibreuse lâche qui a des fibres et/ou faisceaux de fibres libres qui ont des sections libres fixées aux deux extrémités à la surface supérieure (3), où l'épaisseur d'au moins une partie des fibres et/ou faisceaux de fibres libres est inférieure à la moitié de la hauteur d'au moins une partie des saillies antidérapantes (5), et où le matériau de structure fibreuse est épais dans une mesure telle et la souplesse de sa structure fibreuse a une mesure telle qu'il devienne possible qu'au moins une partie des saillies antidérapantes (5) entrent dans la structure fibreuse grâce au fait qu'au moins une partie des saillies antidérapantes (5) trouve de la place dans l'espace libre entre les fibres et/ou les faisceaux de fibres libres du matériau ayant une structure fibreuse.

12. Procédé pour produire une feuille antidérapante (1) convenant pour recouvrir des surfaces revêtues d'un tissu, dans lequel procédé est prévue une couche plastique ayant une surface inférieure (4) et sont prévues des particules rugosifiantes convenablement rigides et résistantes, et les particules rugosifiantes sont placées et fixées selon une orientation aléatoire sur la surface inférieure (4) de la couche plastique et donc des saillies antidérapantes (5) sont formées dessus, **caractérisé en ce que**:
- à titre de particules rugosifiantes, sont prévus des granules au moins partiellement élastomères ou plastomères, et au moins certaines des saillies antidérapantes (5) sont formées de telle sorte que leur hauteur soit établie entre 40 micromètres et 3000 micromètres et leur projection perpendiculaire à la surface inférieure (4) soit formée supérieure à leur section avec la surface inférieure (4), et la fixation est effectuée par soudage ou par adhérence, auquel cas l'adhérence nécessaire est conférée par la substance de la particule ou par la substance de la surface inférieure (4) sans autres matériaux adhésifs, et
- la taille de la feuille antidérapante (1) est rendue inférieure ou égale à 20 mètres carrés et/ou
- un coeur d'enroulement (16) est prévu et la feuille antidérapante (1) est enroulée en une bobine (2) autour du coeur d'enroulement (16).

13. Procédé selon la revendication 12, **caractérisé en ce que** la hauteur des saillies antidérapantes (5) est établie de telle sorte que le quotient des hauteurs des saillies antidérapantes maximale et minimale (5) soit établi à au moins 1,1.

14. Procédé selon l'une quelconque des revendications 12 et 13, **caractérisé en ce qu'**au moins une partie des saillies antidérapantes (5) sont formées de telle sorte que le quotient de la surface de la section de la saillie antidérapante (5) avec le plan de la surface inférieure (4) et de la surface de la projection perpendiculaire de la saillie antidérapante (5) au plan de la surface inférieure (4) soit maintenu à au plus 0,95.
